# EUROPEAN PATENT APPLICATION

(11) **EP 4 096 223 A1**
(43) Date of publication of application: **30.11.2022**
(21) Application number: 20929453.7
(22) Date of filing: 30.11.2020
(51) Int. Cl.: H04N 21/2187, H04N 21/4788, H04N 21/254

(54) **LIVE BROADCAST INTERACTION METHOD AND APPARATUS, ELECTRONIC DEVICE, AND STORAGE MEDIUM**

(30) Priority: 31.03.2020 CN 202010246482
(71) Applicant: Beijing Dajia Internet Information Technology Co., Ltd., Beijing 100085 (CN)
(72) Inventor: WANG, Zhibo, Beijing 100085 (CN)
(74) Representative: Vossius & Partner Patentanwälte Rechtsanwälte mbB
(86) International application number: PCT/CN2020/132920
(87) International publication number: WO 2021/196685

(57) **Abstract**

Provided are a live broadcast interaction method and apparatus, a server, an electronic device, and a storage medium. The method comprises: after receiving a battle start request initiated by a client where a first user identifier is located, acquiring interaction information corresponding to each participant identifier in each battle team identifier, and converting the interaction information into a battle value corresponding to a battle team, wherein the battle team identifier corresponds to a virtual space identifier where the first user identifier is located; and determining a sorting position of each battle team identifier according to the battle value of each battle team identifier. Accordingly, a multi-person team battle mode in a virtual space is achieved, and the interactivity between each participant and audience member is increased.

## Description

### CROSS-REFERENCE TO RELATED APPLICATIONS

This application is based upon and claims priority to Chinese Patent Application No. 202010246482.4, filed March 31, 2020, the entire content of which is incorporated herein by reference.

### TECHNICAL FIELD

The present disclosure relates to a field of live broadcast technology, and more particularly to a method for live broadcast interaction and an apparatus, a server, an electronic device and a storage media.

### BACKGROUND

With development of Internet technology and intelligent mobile terminal devices, various Internet products have brought a lot of convenience and entertainment to people's work and life. In recent years, various live broadcast platforms for live broadcast video have emerged in succession, and the live broadcast video brings people a more real-time social experience. In order to attract more viewers to watch the live broadcast, the live broadcast platform has launched a variety of live broadcast methods for streamer to choose, including live broadcast battle.

In a traditional live broadcast battle, it is usually a battle (PK) between streamers, which is the one-to-one interactive PK of streamers in different live broadcast rooms by mic-link (that is, linking microphones), so as to improve participation of users in live rooms on both sides. In a chat room scene, due to a lot of guests linked on the microphone, there is no one-to-one PK scene. Thus, in the traditional live broadcast battle, it is impossible to achieve multiplayer PK in the chat room scene, leading to a singular interaction mode.

### SUMMARY

The present disclosure provides a method for live broadcast interaction and an apparatus, a server, an electronic device and a storage media to at least solve problems that the multiplayer PK in the chat room scene cannot be achieved in the live broadcast battle in the related art and the interaction mode is single. Technical solutions of the present disclosure is as follows:
According to a first aspect of an embodiment of the present disclosure, a method for live broadcast interaction is provided and includes: after receiving a battle start request initiated by a client where a first user identifier is located; acquiring interaction information corresponding to each participant identifier in each battle team identifier, and converting the interaction information into a battle value of a corresponding battle team; wherein the battle team identifier corresponds to a virtual space identifier where the first user identifier is located; determining, according to a battle value of each battle team identifier, a ranking position of each battle team identifier.

According to a second aspect of an embodiment of the present disclosure, a method for live broadcast interaction is provided and includes: in response to a first triggering operation of a first identity corresponding to a first user identifier on a client where the first user identifier is located, generating a battle start request; acquiring interaction information corresponding to each participant identifier in each battle team identifier, and converting the interaction information into a battle value of a corresponding battle team; wherein the battle team identifier corresponds to a virtual space identifier where the first user identifier is located; determining, according to a battle value of each battle team identifier, a ranking position of each battle team identifier.

According to a third aspect of an embodiment of the present disclosure, a method for live broadcast interaction is provided and includes: displaying at least two battle team identifiers on a client where a second user identifier is located; sending a request of an audio-use authority to a server; after receiving an identifier acquisition instruction fed back by the server according to the request of the audio-use authority, determining the second user identifier as a participant identifier.

According to a fourth aspect of an embodiment of the present disclosure, an apparatus for live broadcast interaction is provided and includes a battle value acquisition unit configured to execute acquiring interaction information corresponding to each participant identifier in each battle team identifier after receiving a battle start request initiated by a client where a first user identifier is located, and converting the interaction information into a battle value of a corresponding battle team; wherein the battle team identifier corresponds to a virtual space identifier where the first user identifier is located; a ranking position determination unit configured to execute determining a ranking position of each battle team identifier according to a battle value of each battle team identifier.

According to a fifth aspect of an embodiment of the present disclosure, an apparatus for live broadcast interaction is provided and includes a battle start request generation unit configured to execute generating a battle start request in response to a first triggering operation of a first identity corresponding to a first user identifier on a client where the first user identifier is located; a battle value acquisition unit configured to execute acquiring interaction information corresponding to each participant identifier in each battle team identifier, and converting the interaction information into a battle value of a corresponding battle team; wherein the battle team identifier corresponds to a virtual space identifier where the first user identifier is located; a ranking position determination unit configured to execute determining a ranking position of each battle team identifier according to a battle value of each battle team identifier.

According to a sixth aspect of an embodiment of the present disclosure, an apparatus for live broadcast interaction is provided and includes a display unit configured to execute displaying at least two battle team identifiers on a client where a second user identifier is located; a request sending unit configured to execute sending a request of an audio-use authority to a server; an identifier acquisition instruction receiving unit configured to execute determining the second user identifier as a participant identifier after receiving an identifier acquisition instruction fed back by the server according to the request of the audio-use authority.

According to a seventh aspect of an embodiment of the present disclosure, a server is provided and includes: a processor; a memory configured for storing an executable instruction for the processor; wherein the processor is configured to execute the instruction to implement the method for live broadcast interaction described in any one of the embodiments of the first aspect.

According to an eighth aspect of an embodiment of the present disclosure, an electronic device is provided and includes a processor; a memory configured for storing an executable instruction for the processor; wherein the processor is configured to execute the instructions to implement the method for live broadcast interaction described in any one of the embodiments of the second aspect or the method for live broadcast interaction described in any one of the embodiments of the third aspect.

According to a ninth aspect of an embodiment of the present disclosure, a storage medium is provided, an instruction in the storage medium, when executed by a processor of a server, enables the server to execute the method for live broadcast interaction described in any one of the embodiments of the first aspect.

According to a tenth aspect of an embodiment of the present disclosure, a storage medium is provided, an instruction in the storage medium, when executed by a processor of an electronic device, enables the electronic device to execute the method for live broadcast interaction described in any one of the embodiments of the second aspect or the method for live broadcast interaction described in any one of the embodiments of the third aspect.

According to an eleventh aspect of the embodiment of the present disclosure, a computer program product is provided, the program product includes a computer program stored in a readable storage medium, and at least one processor of an device reads and executes the computer program from the readable storage medium, enables the device to perform the method for live broadcast interaction described in any one of the embodiments of the first aspect or the method for live broadcast interaction described in any one of the embodiments of the second aspect or the method for live broadcast interaction described in any one of the embodiments of the third aspect.

It should be understood that the above general description and the following detailed description are merely exemplary and explanatory, and cannot limit the present disclosure.

### BRIEF DESCRIPTION OF THE DRAWINGS

The accompanying drawings herein, which are incorporated in and constitute a part of the specification, illustrate the embodiments consistent with the present disclosure and are used in conjunction with the specification to explain the principles of the present disclosure, and do not constitute improper limit to the present disclosure.
FIG. 1 is application environment diagram of a method for live broadcast interaction illustrated according to an exemplary embodiment.
FIG. 2 is a flowchart of a method for live broadcast interaction illustrated according to an exemplary embodiment.
FIG. 3 is a schematic view of an interface of a client where a virtual space identifier is located, according to an exemplary embodiment.
FIG. 4 is a flowchart of a method for live broadcast interaction illustrated according to an exemplary embodiment.
FIG. 5 is a schematic view of an interface of a client where a virtual space identifier is located, according to an exemplary embodiment.
FIG. 6 is a schematic view of an interface of a client where a virtual space identifier is located, according to an exemplary embodiment.
FIG. 7 a schematic view of an interface of a client where a virtual space identifier is located, according to an exemplary embodiment.
FIG. 8 is a flowchart of a method for live broadcast interaction illustrated according to an exemplary embodiment.
FIG. 9 is a flowchart of a method for live broadcast interaction illustrated according to an exemplary embodiment.
FIG. 10 is a flowchart of a method for live broadcast interaction illustrated according to an exemplary embodiment.
FIG. 11 is a block diagram of an apparatus for live broadcast interaction illustrated according to an exemplary embodiment.
FIG. 12 is a block diagram of an apparatus for live broadcast interaction illustrated according to an exemplary embodiment.
FIG. 13 is a block diagram of an apparatus for live broadcast interaction illustrated according to an exemplary embodiment.
FIG. 14 is an internal configuration view of a server illustrated according to an exemplary embodiment.
FIG. 15 is an internal configuration view of an electronic device illustrated according to an exemplary embodiment.

### DETAILED DESCRIPTION

In order to enable those of ordinary skill in the art to better understand technical solutions of the present disclosure, the technical solutions in embodiments of the disclosure will be described clearly and completely with reference to the accompanying drawings.

It should be noted that terms such as "first" and "second" in the specification, claims and the above-mentioned drawings of the present disclosure are used to distinguish similar objects, and not necessarily used to describe a specific order or sequence. It should be understood that data used in this way may be interchanged under appropriate circumstances, such that embodiments of the disclosure described herein may be implemented in an order other than those illustrated or described herein. The implementations described in the following exemplary embodiments do not represent all implementations consistent with the disclosure. Rather, they are merely examples of apparatuses and methods consistent with some aspects of the disclosure as detailed in the appended claims.

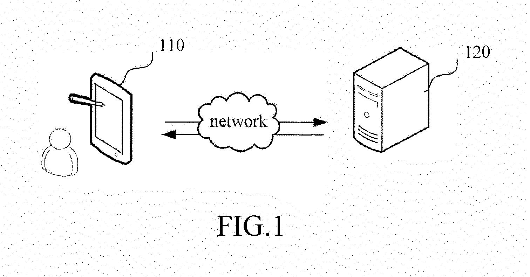

The method for live broadcast interaction provided by the present disclosure may be applied to application environment illustrated in FIG. 1. A client 110 interacts with a server 120 through a network. The client 110 may be, but not limited to, various personal computers, notebook computers, smart phones, tablet computers and portable wearable devices. The server 120 may be implemented by an independent server or a server cluster composed of a plurality of servers. The client 110 initiates a battle start request to the server 120. After receiving the battle start request, the server 120 acquires battle score of each battle team, and determines a winning team and a losing team according to the battle score of each battle team. Alternatively, the client 110 may independently achieve acquiring the battle score of each battle team, and determining a technical solution of the winning team and the losing team according to the battle score of each battle team.

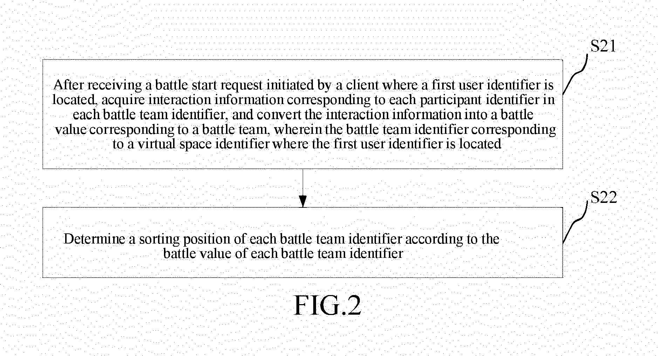

FIG. 2 is a flowchart of a method for live broadcast interaction illustrated according to an exemplary embodiment. As illustrated in FIG. 2, the method for live broadcast interaction is used in the server 120 of FIG. 1.

In S21, after receiving a battle start request initiated by a client where a first user identifier is located; interaction information corresponding to each participant identifier in each battle team identifier is acquired, and the interaction information is converted into a battle value of a corresponding battle team; wherein the battle team identifier corresponds to a virtual space identifier where the first user identifier is located.

The user identifier is an identifier used to distinguish a user identity. For example, device identifier code, and the like. The virtual space identifier may be an identifier that uniquely indicates a chat room or a live room created according to the first user identifier, and the virtual space identifier may be a string, and the like. The battle team identifier is an identifier used to distinguish the battle team. For example, different names (yellow team and blue team) are used as the battle team identifier. The interaction information indicates interaction information of the audience and participant identifier in the chat room, such as, gift value received by each participant identifier, number of new fans of each participant identifier, number of times each participant identifier being @, and the like. The battle value indicates a score obtained by a battle team.

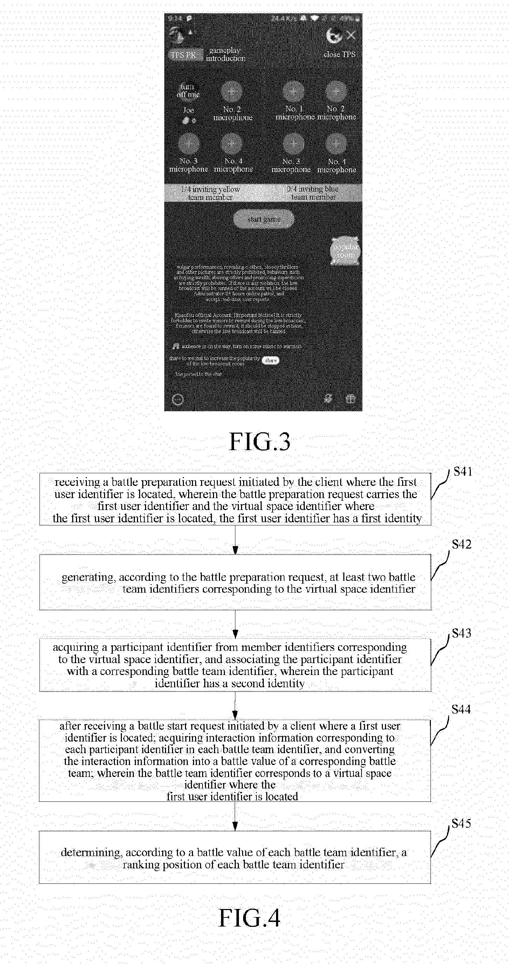

In some embodiments, as illustrated in FIG. 3, a "start game" control is provided on an interface of the client. When all the participant identifiers are determined, the first identity corresponding to the first user identifier may perform a click operation on the "start game" control, and the client where the first user identifier is located generates a battle start request in response to the click operation, the client where the first user identifier is located sends the battle start request to the server, after receiving the battle start request, the server acquires the interaction information corresponding to each participant identifier in each battle team identifier, and then converts the interaction information into the battle value of the corresponding battle team.

In S22, according to a battle value of each battle team identifier, a ranking position of each battle team identifier is determined.

In some embodiments, each battle team identifier is ranked according to the battle value in a descending order to acquire the ranking position. For ease of understanding, for example, if the battle value of yellow team is 1099 and the battle value of blue team is 982, the ranking position of the yellow team is a first rank and the ranking position of the blue team is a second rank.

The above method for live broadcast interaction includes, after receiving a battle start request initiated by a client where a first user identifier is located, acquiring interaction information corresponding to each participant identifier in each battle team identifier, and converting the interaction information into a battle value of a corresponding battle team; wherein the battle team identifier corresponds to a virtual space identifier where the first user identifier is located; determining, according to a battle value of each battle team identifier, a ranking position of each battle team identifier, and converting the interaction information corresponding to each participant identifier in each battle team identifier into the battle value of the corresponding battle team.

Compared with the existing way of giving gifts in PK, the method in the embodiment of the present disclosure increases interaction between each participant and the audience, enriches interaction mode, and increases stickiness between an account identifier and a platform.

FIG. 4 is a flowchart of a method for live broadcast interaction illustrated according to an exemplary embodiment. As illustrated in FIG. 4, the method for live broadcast interaction is used in the server 120 of FIG. 1.

In S41, a battle preparation request initiated by the client where the first user identifier is located is received, wherein the battle preparation request carries the first user identifier and the virtual space identifier where the first user identifier is located, the first user identifier has a first identity.

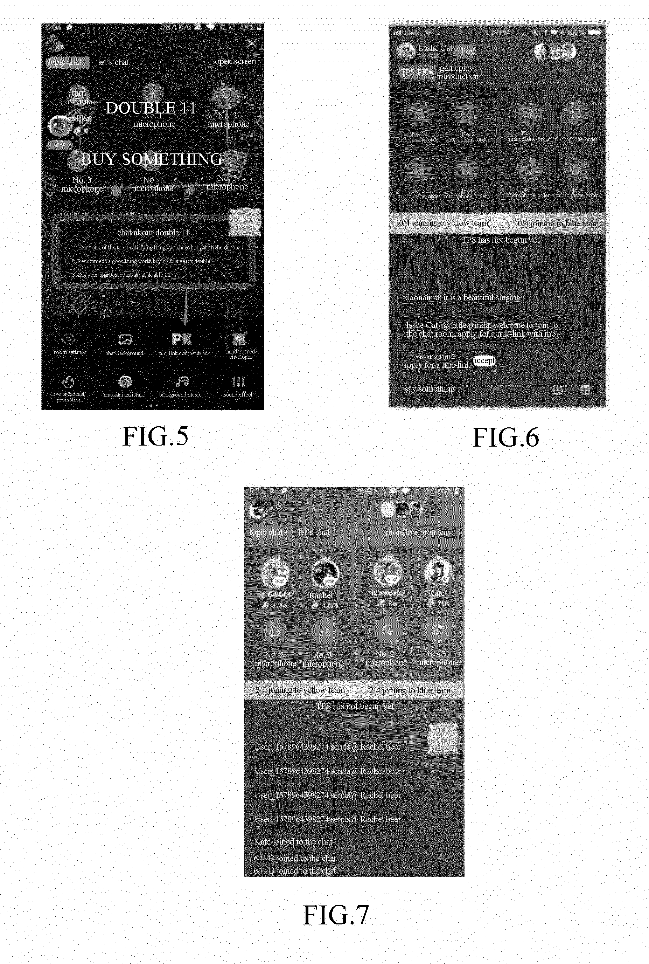

The first identity is a streamer identifier. The description of the user identifier, the virtual space identifier and the like is consistent with those described in the previous embodiment, which will not be repeated here. In some embodiments, as illustrated in FIG. 5, the interface of the client has a "PK mic-link battle" control, and the first identity corresponding to the first user identifier may perform a click operation on the "PK mic-link battle" control. The client where the first user identifier is located generates the battle preparation request in response to the click operation, and the client where the first user identifier is located sends the battle preparation request to the server.

In S42, according to the battle preparation request, at least two battle team identifiers corresponding to the virtual space identifier is generated.

In some embodiments, after the server receives the battle preparation request, the team PK service (TPS) of the server generates at least two battle team identities corresponding to the virtual space identifier, such as the battle team identifier-the yellow team and the battle team identifier-the blue team, and meanwhile enters a PK preparation stage, as illustrated in FIG. 6, and two regions are also illustrated in the interface of the client for indicating the battle team identifier-the yellow team and the battle team identifier-the blue team.

In S43, a participant identifier is acquired from member identifiers corresponding to the virtual space identifier, and the participant identifier is associated with a corresponding battle team identifier, wherein the participant identifier has a second identity.

The member identifier corresponding to the virtual space identifier indicates a member in the chat room corresponding to the virtual space identifier. The participant identifier indicates an identifier of the member joining to the battle team. The second identity indicates an identify of the member joining to the battle team. In some embodiments, the member identifier corresponding to the virtual space identifier is acquired according to the virtual space identifier, and the identifier of the member joining to the battle team is acquired from the member identifier, and the participant identifier is associated with the corresponding battle team identifier. For example, the member identifiers corresponding to the virtual space identifier includes 1, 2, 3, 4, 5, and 6, the battle team identifier corresponding to 1, 2, and 3 is the yellow team, and the battle team identifier corresponding to 4, 5, and 6 is the blue team. In this way, 1, 2, and 3 may be associated with the yellow team, and 4, 5, and 6 may be associated with the blue team.

In S44, after a battle start request initiated by a client where a first user identifier is located is received; interaction information corresponding to each participant identifier in each battle team identifier is acquired, and the interaction information is converted into a battle value of a corresponding battle team; wherein the battle team identifier corresponds to a virtual space identifier where the first user identifier is located.

In S45, according to a battle value of each battle team identifier, a ranking position of each battle team identifier is determined.

In some embodiments, content described in S44 and S45 above are consistent with that described in S21 and S22 in the embodiment illustrated in FIG 2, which will not be repeated here.

In the above method for live broadcast interaction, the server receives the battle preparation request initiated by the client where the first user identifier is located. Since the battle preparation request includes the virtual space identifier, at least two battle team identifiers corresponding to the virtual space identifier may be generated, and the participant identifier participating in the battle may be generated. Acquiring the interaction information corresponding to each participant identifier in each battle team identifier, and converting the interaction information into a battle value of a corresponding battle team may achieve a battle mode with a multiplayer team in a virtual space. In addition, the interaction information corresponding to each participant identifier in each battle team identifier is converted into the battle value of the corresponding battle team. The method for live broadcast interaction provided by the embodiment of the present disclosure increases the interaction between each participant and the audience.

In some embodiments, the participant identifier being acquired from the member identifiers corresponding to the virtual space identifier includes: acquiring, according to the virtual space identifier, a corresponding member identifier and a member state corresponding to each member identifier; determining a member identifier whose member state is a first state as the participant identifier, wherein the first state is a state with an audio-use authority.

In some embodiments, the member identifier corresponding to the virtual space identifier (that is, acquiring a person in the chat room corresponding to the virtual space identifier) is acquired according to the virtual space identifier, and then a member state corresponding to each member identifier is acquired.

The member state indicates whether the member has a state with the audio-use authority.

In some embodiments, if the chat room corresponding to the virtual space identifier has a member identifier with the state of the audio-use authority, the member identifier with the state of the audio-use authority is directly determined as the participant identifier, and the participant identifier is randomly grouped, and the grouped participant identifier is associated with the corresponding battle team identifier. For example, the chat room corresponding to the virtual space identifier contains five member identifiers with the state of the audio-use authority including: a first user identifier A (i.e. a streamer user identifier A), a third user identifier B, a third user identifier C, a third user identifier D, and a third user identifier E, When the first identity corresponding to the first user identifier A may perform a click operation on the "PK mic-link battle" control, the client where the first user identifier A is located generates a battle preparation request in response to the click operation, the client where the first user identifier A is located sends the battle preparation request to the server, and the team PK service (TPS) of the server generates at least two battle team identities corresponding to the virtual space identifier, such as the battle team identifier-the yellow team and the battle team identifier- the blue team, and meanwhile enters the PK preparation stage, and two regions are also illustrated in the interface of the client for indicating the battle team identifier-the yellow team and the battle team identifier-the blue team. Meanwhile, the server acquires a corresponding member identifier and a member state corresponding to each member identifier according to the virtual space identifier, and determines an identifier (the third user identifier B, the third user identifier C, the third user identifier D, the third user identifier E) other than the first user identifier A as the participant identifier. Then, the server randomly and evenly groups the participant identifiers. For example, the third user identifier B and the third user identifier C are determined as one group and associated with the yellow team, and the third user identifier D and the third user identifier E are determined as one group and associated with the blue team. Through the above method, the battle team may be quickly determined according to the state of the audio authority, so as to improve efficiency. As illustrated in FIG. 7, the yellow team on the left of the interface and the blue team on the right of the interface display the two participant identifiers or nicknames corresponding to the two participant identifiers, respectively.

It should be noted that the third user identifier refers to an identifier of the member identifier with the state of the audio-use authority before the server receives the battle preparation request.

If number of the participant identifiers is an odd number, such as five participant identifiers, and the five participant identifiers are divided into 3-2, and that is, one battle team identifier is assigned three participant identifiers, and the other battle team identifier is assigned two participant identifiers. As illustrated in FIG. 7, one more participant identifier (that is, one more person) is assigned to the yellow team on the left of the interface in FIG. 7.

In some embodiments, the method further includes: when detecting that a member state of a member identifier is switched from a second state to a first state, determining the member identifier switched to the first state as the participant identifier, wherein the second state is a state without an audio-use authority.

In some embodiments, as illustrated in FIG. 7, the server randomly and evenly groups the participant identifiers. For example, the third user identifier B and the third user identifier C are determined as one group and associated with the yellow team, and the third user identifier D and the third user identifier E are determined as one group and associated with the blue team. After the yellow team on the left of the interface and the blue team on the right of the interface display the two participant identifiers or the nicknames corresponding to the two participant identifiers, respectively, there are remaining microphone-order identifiers in the yellow team on the left and the blue team on the right, and thus in the chat room, the member identifier in the state without the audio-use authority (such as a second user identifier F and a second user identifier H) may also join to the battle team identifier. For example, if the second user identifier F and the second user identifier H whose member states are switched from the state without the audio-use authority to the state with the audio-use authority, the second user identifier F and the second user identifier H are determined as the participant identifiers. Through the above solution, the member identifier in the state without the audio-use authority (that is, the audience) in the chat room may participate in the battle, which increases the stickiness between the account identifier and the platform and increases the interaction between each participant and the audience.

In some embodiments, there are two kinds of ways to switch the second user identifier F and the second user identifier H from the state without the audio-use authority to the state with the audio-use authority. As illustrated in FIG. 7, a first one is described as follows: the third identify corresponding to the second user identifier F initiates a triggering operation on a microphone-order identifier of the yellow team (such as No. 3 microphone-order in the yellow team), in response to this operation, the client where the second user identifier F is located generates a request of an audio-use authority and sends the request of the audio-use authority to the server, the server acquires the microphone-order identifier clicked by the second user identifier F and acquires the second user identifier F or a nickname of the second user identifier F and the like, and broadcasts the microphone-order identifier and the second user identifier F (or the nickname of the second user identifier F) to the client where all member identifiers in the virtual space identifier are located. Thus, each member may see the No. 3 microphone-order of the second user identifier F joining to the yellow team at the corresponding client. A second one is described as follows: all the member identifiers corresponding to the virtual space identifier may be displayed on the interface of the client where the first user identifier is located, the first identity corresponding to the first user identifier first clicks to join to the yellow team, and a list is displayed showing the member identifier corresponding to the virtual space identifier, the first identity corresponding to the first user identifier clicks a certain member identifier (such as the second user identifier F), and the client where the first user identifier is located generates an invitation request including the second user identifier F, the client where the first user identifier is located sends the invitation request to the second user identifier F through the server, such that the second user identifier F joins to the yellow team.

In some embodiments, if there is no member identifier with the audio-use authority in the chat room corresponding to the virtual space identifier, the participant identifier is determined according to the method of switching the second user identifier F and the second user identifier H from the state without the audio-use authority to the state with the audio-use authority. The specific implementation is the same as that described in the above, which will not be repeated here.

In some embodiments, the interaction information corresponding to each participant identifier in each battle team identifier being acquired, and the interaction information being converted into the battle value of the corresponding battle team includes: acquiring the interaction information corresponding to each participant identifier in each battle team identifier, and converting the interaction information into a battle value of the participant identifier; determining a sum of the battle values of all participant identifiers in the battle team identifier as the battle value of the battle team.

In some embodiments, after receiving the battle start request initiated by the client where the first user identifier is located, a countdown battle mode is entered, and the TPS acquires the interaction information corresponding to each participant identifier in each battle team identifier (including gift value received by each participant identifier, number of new fans of each participant identifier, number of times each participant identifier being @, and the like), and converts the interaction information corresponding to each participant identifier into the battle value of the participant identifier, and determines the sum of the battle values of all participant identities in the battle team identifier as the battle value of the battle team, so as to expand a battle value conversion rule. Moreover, by adding up the battle values of all participants in the battle team identifier, compared with the existing way of giving gifts in PK, the method in the embodiment of the present disclosure increases the interaction of the battle.

In some embodiments, when a battle team identifier corresponding to the participant identifier is changed from a first battle team identifier to a second battle team identifier, the battle value of the participant identifier before the change remains a battle value of the battle team corresponding to the first battle team identifier.

In some embodiments, for example, the yellow team includes the second user identifier F, and a battle countdown is 20 minutes. If the TPS acquires a battle value the second user identifier F is 100 at a 10-minute countdown, the 100 needs to be counted to the yellow team. If the second user identifier F joins to the blue team at a 9-minute-59-second countdown, the 100 battle value from 20 minutes, 0 second to 10 minutes, 0 second still stays with the yellow team, and the previous battle value is not taken away as the second user identifier F changes the battle team identifier, which increases fairness of the battle.

In some embodiments, the method further includes: determining, according to the ranking position of each battle team identifier, a target battle team identifier for performing a preset task; wherein the preset task includes a preset duration; after reaching the preset duration, returning to the step of said acquiring the participant identifier from the member identifiers corresponding to the virtual space identifier.

The preset task indicates a penalty task. In some embodiments, when the ranking position of each battle team identifier is determined, a battle team identifier with a preset number that is ranked behind is determined as the target battle team identifier according to the ranking position. The battle team identifier other than the battle team identifier with a first rank in the ranking position is determined as the target battle team. The battle team identifier with a last rank in the ranking position is determined as the target battle team. After the preset duration is reached (indicating that the target team identifier has completed the preset task), the method returns to perform the step of acquiring the participant identifier from the member identifiers corresponding to the virtual space identifier. In this way, in case that one round of battle is over, a next round of battle may be quickly entered, and time that the account stays in the chat room may be increased.

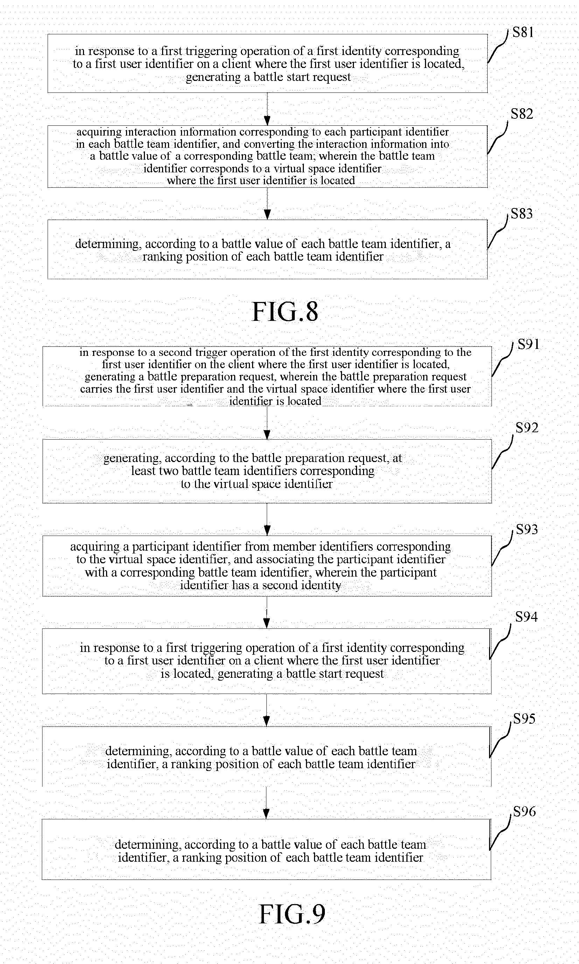

FIG. 8 is a flowchart of a method for live broadcast interaction illustrated according to an exemplary embodiment. As illustrated in FIG. 8, the method for live broadcast interaction is used in the client 110 of FIG. 1.

In S81, in response to a first triggering operation of a first identity corresponding to a first user identifier on a client where the first user identifier is located, a battle start request is generated. In S82, interaction information corresponding to each participant identifier in each battle team identifier is acquired, and the interaction information is converted into a battle value of a corresponding battle team; wherein the battle team identifier corresponds to a virtual space identifier where the first user identifier is located. In S83, according to a battle value of each battle team identifier, a ranking position of each battle team identifier is determined.

In some embodiments, as illustrated in FIG. 3, a "start game" control is provided on an interface of the client. When all the participant identifiers are determined, the first identity corresponding to the first user identifier may perform a click operation on the "start game" control, and the client where the first user identifier is located generates a battle start request in response to the click operation, the client where the first user identifier is located sends the battle start request to the server, after receiving the battle start request, the server acquires the interaction information corresponding to each participant identifier in each battle team identifier, and then converts the interaction information into the battle value of the corresponding battle team. Each battle team identifier is ranked according to the battle value in a descending order to acquire the ranking position. For ease of understanding, for example, if the battle value of yellow team is 1099 and the battle value of blue team is 982, the ranking position of the yellow team is a first rank and the ranking position of the blue team is a second rank.

The above method for live broadcast interaction, in response to a first triggering operation of a first identity corresponding to a first user identifier on a client where the first user identifier is located, generates a battle start request, acquires interaction information corresponding to each participant identifier in each battle team identifier, and converts the interaction information into a battle value of a corresponding battle team; wherein the battle team identifier corresponds to a virtual space identifier where the first user identifier is located, and determines, according to a battle value of each battle team identifier, a ranking position of each battle team identifier. The interaction information corresponding to each participant identifier in each battle team identifier is converted into the battle value of the corresponding battle team.

Compared with the existing way of giving gifts in PK, the method in the embodiment of the present disclosure increases interaction between each participant and the audience, enriches interaction mode, and increases stickiness between an account identifier and a platform.

FIG. 9 is a flowchart of a method for live broadcast interaction illustrated according to an exemplary embodiment. As illustrated in FIG. 9, the method for live broadcast interaction is used in the client 110 of FIG. 1.

In S91, in response to a second trigger operation of the first identity corresponding to the first user identifier on the client where the first user identifier is located, a battle preparation request is generated, wherein the battle preparation request carries the first user identifier and the virtual space identifier where the first user identifier is located.

The first identity is a streamer identifier. The description of the user identifier, the virtual space identifier and the like is consistent with those described in the previous embodiment, which will not be repeated here.

In some embodiments, as illustrated in FIG. 5, the interface of the client has a "PK mic-link battle" control, and the first identity corresponding to the first user identifier may perform a click operation on the "PK mic-link battle" control. The client where the first user identifier is located generates the battle preparation request in response to the click operation, and the client where the first user identifier is located sends the battle preparation request to the server.

In S92, according to the battle preparation request, at least two battle team identifiers corresponding to the virtual space identifier is generated.

In some embodiments, after the server receives the battle preparation request, the team PK service (TPS) of the server generates at least two battle team identities corresponding to the virtual space identifier, such as the battle team identifier-the yellow team and the battle team identifier-the blue team, and meanwhile enter a PK preparation stage, as illustrated in FIG. 6, and two regions are also illustrated in the interface of the client for indicating the battle team identifier-the yellow team and the battle team identifier-the blue team.

In S93, a participant identifier is acquired from member identifiers corresponding to the virtual space identifier, and the participant identifier is associated with a corresponding battle team identifier, wherein the participant identifier has a second identity.

In some embodiments, the member identifier corresponding to the virtual space identifier is acquired according to the virtual space identifier, and the identifier of the member joining to the battle team is acquired from the member identifier, and the participant identifier is associated with the corresponding battle team identifier. For example, the member identifiers corresponding to the virtual space identifier includes 1, 2, 3, 4, 5, and 6, the battle team identifier corresponding to 1, 2, and 3 is the yellow team, and the battle team identifier corresponding to 4, 5, and 6 is the blue team. In this way, 1, 2, and 3 may be associated with the yellow team, and 4, 5, and 6 may be associated with the blue team.

In S94, in response to a first triggering operation of a first identity corresponding to a first user identifier on a client where the first user identifier is located, a battle start request is generated.

In S95, interaction information corresponding to each participant identifier in each battle team identifier is acquired, and the interaction information is converted into a battle value of a corresponding battle team; wherein the battle team identifier corresponds to a virtual space identifier where the first user identifier is located.

In S96, according to a battle value of each battle team identifier, a ranking position of each battle team identifier is determined.

Content described in S94, S95 and S96 in some embodiments is consistent with that described in S81, S82 and S83 in the previous embodiment, which will not be repeated here.

The above method for live broadcast interaction acquires the interaction information corresponding to each participant identifier in each battle team identifier, and converts the interaction information into the battle value of the corresponding battle team, so as to achieve a battle mode with a multiplayer team in a virtual space. In addition, the interaction information corresponding to each participant identifier in each battle team identifier is converted into the battle value of the corresponding battle team. Compared with the existing way of giving gifts in PK, the method for live broadcast interaction provided by the embodiment of the present disclosure increases the interaction between each participant and the audience.

In some embodiments, the participant identifier from the member identifiers corresponding to the virtual space identifier being acquired includes: acquiring, according to the virtual space identifier, a corresponding member identifier and a member state corresponding to each member identifier; determining a member identifier whose member state is a first state as the participant identifier, wherein the first state is a state with an audio-use authority.

In some embodiments, the method further includes: when detecting that a member state of a member identifier is switched from a second state to a first state, determining the member identifier switched to the first state as the participant identifier, wherein the second state is a state without an audio-use authority.

In some embodiments, the interaction information corresponding to each participant identifier in each battle team identifier being acquired, and the interaction information being converted into the battle value of the corresponding battle team includes: acquiring the interaction information corresponding to each participant identifier in each battle team identifier, and converting the interaction information into a battle value of the participant identifier; determining a sum of the battle values of all participant identifiers in the battle team identifier as the battle value of the battle team.

In some embodiments, when a battle team identifier corresponding to the participant identifier is changed from a first battle team identifier to a second battle team identifier, the battle value of the participant identifier before the change remains a battle value of the battle team corresponding to the first battle team identifier.

In some embodiments, the method further includes: determining, according to the ranking position of each battle team identifier, a target battle team identifier for performing a preset task; wherein the preset task includes a preset duration; after reaching the preset duration, returning to the step of said acquiring the participant identifier from the member identifiers corresponding to the virtual space identifier.

In some embodiments, content described in the above embodiments with a terminal 110 as an execution subject is basically the same as that described in the embodiments with the server 120 as an execution subject, except that the execution subjects are different, which will not be repeated here.

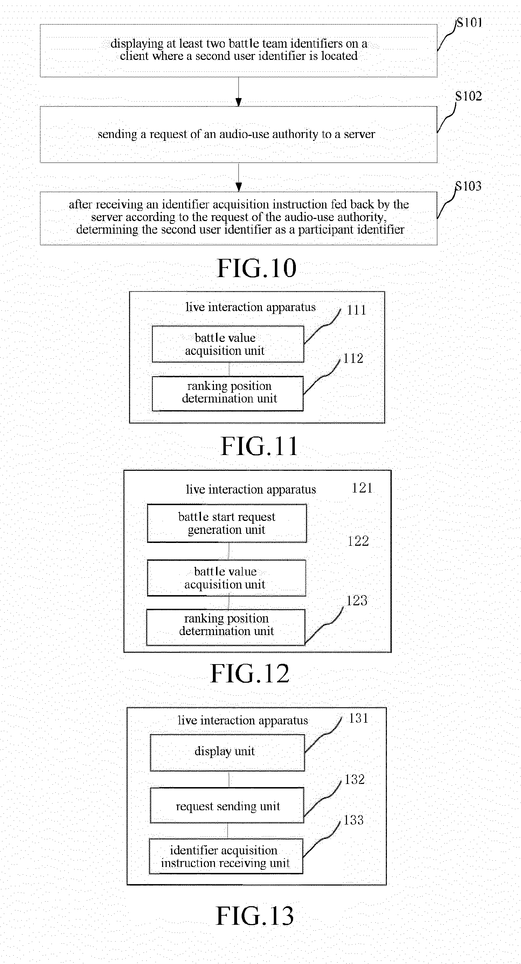

FIG. 10 is a flowchart of a method for live broadcast interaction illustrated according to an exemplary embodiment. As illustrated in FIG. 10, the method for live broadcast interaction is used in the client 110 of FIG. 1.

In S101, at least two battle team identifiers is displayed on a client where a second user identifier is located;
In some embodiments, the second user identifier is an identifier that indicates an identifier of an audience identity in the chat room. At least two battle team identifiers are displayed on the client where each second user identifier is located, and the member identifier included in each battle team identifier is also displayed.

In S102, a request of an audio-use authority is sent to a server.

In some embodiments, as illustrated in FIG. 7, the server randomly and evenly groups the participant identifiers. For example, the third user identifier B and the third user identifier C are determined as one group and associated with the yellow team, and the third user identifier D and the third user identifier E are determined as one group and associated with the blue team. After the yellow team on the left of the interface and the blue team on the right of the interface display the two participant identifiers or the nicknames corresponding to the two participant identifiers, respectively, there are remaining microphone-order identifiers in the yellow team on the left and the blue team on the right, and thus in the chat room, the member identifier in the state without the audio-use authority may also join to the battle team identifier. So, the member identifier in the state without the audio-use authority in the chat room may also join to the battle team identifier, and thus, the member identifier in the state without the audio-use authority initiates the request of the audio-use authority to the server, to request to use the audio.

In S103, after receiving an identifier acquisition instruction fed back by the server according to the request of the audio-use authority, the second user identifier is determined as a participant identifier.

In some embodiments, after receiving a request of the audio-use authority initiated by a client, the server feeds back an identifier acquisition instruction to the client, that the client may use the audio is notified, thereby that the second user identifier may join to the battle team identifier, such that the audience may join the team to battle, increasing the stickiness between the account identifier and the platform.

In some embodiments, before sending the request of the audio-use authority to the server, the method further includes: generating, in response to a third triggering operation of a third identify corresponding to the second user identifier on a microphone-order identifier of the client where the second user identifier is located, or in response to an invitation request initiated by a client where the first user identifier is located to the client where the second user identifier is located, the request of the audio-use authority.

In some embodiments, at least two battle team identities corresponding to the virtual space identifier are generated, such as the battle team identifier - yellow team and the battle team identifier - blue team. At the same time, it will enter the PK preparation stage, as illustrated in FIG. 5, and two regions are also illustrated in the interface of the client for indicating the battle team identifier-the yellow team and the battle team identifier-the blue team. Then, the second user identifier may join to the battle team identifier. Specifically, there are two kinds of ways.

A first one is described as follows: the third identify corresponding to the second user identifier F initiates a triggering operation on a microphone-order identifier of the yellow team (such as No. 3 microphone-order in the yellow team), in response to this operation, the client where the second user identifier F is located generates a request of an audio-use authority and sends the request of the audio-use authority to the server, the server acquires the microphone-order identifier clicked by the second user identifier F and acquires the second user identifier F or a nickname of the second user identifier F and the like, and broadcasts the microphone-order identifier and the second user identifier F (or the nickname of the second user identifier F) to the client where all member identifiers in the virtual space identifier are located. Thus, each member may see the No. 3 microphone-order of the second user identifier F joining to the yellow team at the corresponding client. A second one is described as follows: all the member identifiers corresponding to the virtual space identifier may be displayed on the interface of the client where the first user identifier is located, as illustrated in FIG. 7, the first identity corresponding to the first user identifier first clicks to join to the yellow team, and a list is displayed showing the member identifier corresponding to the virtual space identifier, the first identity corresponding to the first user identifier clicks a certain member identifier (such as the second user identifier F), and the client where the first user identifier is located generates an invitation request including the second user identifier F, the client where the first user identifier is located sends the invitation request to the second user identifier F through the server, such that the second user identifier F joins to the yellow team. Through the above two ways, the second user identifier may join to the battle team identifier, such that the joined battle team has diversity.

In some embodiments, the method further includes: sending a behavior data of the participant identifier to the server and/or to the client where the first user identifier is located.

In some embodiments, after the second user identifier determines that it is a participant identifier, the terminal acquires the behavior data of the participant identifier (such as action, language, and the like.) and sends the behavior data to the server and/or the client where the first user identifier is located for others to view.

It should be understood that although steps in the flowcharts of FIGS. 2, 3 and 8-10 are displayed in turn according to the arrows, these steps are not necessarily executed in the sequence indicated by the arrows. Unless explicitly stated herein, the execution of these steps is not strictly limited to the order, and these steps may be executed in other sequences. Moreover, at least a part of the steps in FIGS. 2,3, and 8-10 may include a plurality of steps or stages. These steps or stages are not necessarily executed at the same time, but may be executed at different times. The execution sequence of these steps or stages is also not necessarily performed sequentially, but may be performed alternately with other steps or at least a portion of steps or stages in the other steps.

FIG. 11 is a block diagram of an apparatus for live broadcast interaction illustrated according to an exemplary embodiment. Referring to FIG. 11, the apparatus includes a battle value acquisition unit 111 and a ranking position determination unit 112. The battle value acquisition unit 111 is configured to execute acquiring interaction information corresponding to each participant identifier in each battle team identifier after receiving a battle start request initiated by a client where a first user identifier is located, and converting the interaction information into a battle value of a corresponding battle team; wherein the battle team identifier corresponds to a virtual space identifier where the first user identifier is located; the ranking position determination unit 112 is configured to execute determining a ranking position of each battle team identifier according to a battle value of each battle team identifier.

In an exemplary embodiment, the apparatus for live broadcast interaction further includes: a battle preparation request receiving unit configured to execute receiving a battle preparation request initiated by the client where the first user identifier is located, wherein the battle preparation request carries the first user identifier and the virtual space identifier where the first user identifier is located; and the first user identifier has a first identity; a battle team identifier generation unit configured to execute generating at least two battle team identities corresponding to the virtual space identifier according to the battle preparation request; a participant identifier acquisition unit configured to execute acquiring a participant identifier from member identifiers corresponding to the virtual space identifier and associating the participant identifier with a corresponding battle team identifier; wherein the participant identifier has a second identity.

In an exemplary embodiment, the participant identifier acquisition unit is further configured to execute: acquiring, according to the virtual space identifier, a corresponding member identifier and a member state corresponding to each member identifier; determining a member identifier whose member state is a first state as the participant identifier, wherein the first state is a state with an audio-use authority.

In an exemplary embodiment, the participant identifier acquisition unit is further configured to execute: when a member state of a member identifier switched from a second state to a first state is detected, determining the member identifier switched to the first state as the participant identifier, wherein the second state is a state without an audio-use authority.

In an exemplary embodiment, the ranking position determination unit 112 is further configured to execute: acquiring the interaction information corresponding to each participant identifier in each battle team identifier, and converting the interaction information into a battle value of the participant identifier; determining a sum of the battle values of all participant identifiers in the battle team identifier as the battle value of the battle team.

In an exemplary embodiment, when a battle team identifier corresponding to the participant identifier is changed from a first battle team identifier to a second battle team identifier, the battle value of the participant identifier before the change remains a battle value of the battle team corresponding to the first battle team identifier.

In an exemplary embodiment, the apparatus for live broadcast interaction further includes: a determination unit configured to execute determining a target battle team identifier for performing a preset task according to the ranking position of each battle team identifier; wherein the preset task includes a preset duration; after reaching the preset duration, returning to the step of said acquiring the participant identifier from the member identifiers corresponding to the virtual space identifier.

FIG. 12 is a block diagram of an apparatus for live broadcast interaction illustrated according to an exemplary embodiment. Referring to FIG. 12, the apparatus includes a battle start request generation unit 121, a battle value acquisition unit 122, and a ranking position determination unit 123. The battle start request generation unit is configured to execute generating a battle start request in response to a first triggering operation of a first identity corresponding to a first user identifier on a client where the first user identifier is located; the battle value acquisition unit 122 is configured to execute acquiring interaction information corresponding to each participant identifier in each battle team identifier, and converting the interaction information into a battle value of a corresponding battle team; wherein the battle team identifier corresponds to a virtual space identifier where the first user identifier is located, and the ranking position determination unit 123 is configured to execute determining a ranking position of each battle team identifier according to a battle value of each battle team identifier.

In an exemplary embodiment, the apparatus for live broadcast interaction further includes a battle preparation request generation unit configured to execute generating a battle preparation request in response to a second trigger operation of the first identity corresponding to the first user identifier on the client where the first user identifier is located, wherein the battle preparation request carries the first user identifier and the virtual space identifier where the first user identifier is located; a battle team identifier generation unit configured to execute generating at least two battle team identifiers corresponding to the virtual space identifier according to the battle preparation request; a participant identifier acquisition unit configured to execute acquiring a participant identifier from member identifiers corresponding to the virtual space identifier, and associating the participant identifier with a corresponding battle team identifier, wherein the participant identifier has a second identity.

In an exemplary embodiment, the participant identifier acquisition unit is further configured to execute: acquiring, according to the virtual space identifier, a corresponding member identifier and a member state corresponding to each member identifier; determining a member identifier whose member state is a first state as the participant identifier, wherein the first state is a state with an audio-use authority.

In an exemplary embodiment, the participant identifier acquisition unit is further configured to execute: when a member state of a member identifier switched from a second state to a first state is detected, determining the member identifier switched to the first state as the participant identifier, wherein the second state is a state without an audio-use authority.

In an exemplary embodiment, the ranking position determination unit 123 is further configured to execute: acquiring the interaction information corresponding to each participant identifier in each battle team identifier, and converting the interaction information into a battle value of the participant identifier; determining a sum of the battle values of all participant identifiers in the battle team identifier as the battle value of the battle team.

In an exemplary embodiment, when a battle team identifier corresponding to the participant identifier is changed from a first battle team identifier to a second battle team identifier, the battle value of the participant identifier before the change remains a battle value of the battle team corresponding to the first battle team identifier.

In an exemplary embodiment, the apparatus for live broadcast interaction further includes a determination unit configured to execute determining a target battle team identifier for performing a preset task according to the ranking position of each battle team identifier; wherein the preset task includes a preset duration; after reaching the preset duration, returning to the step of said acquiring the participant identifier from the member identifiers corresponding to the virtual space identifier.

FIG. 13 is a block diagram of an apparatus for live broadcast interaction illustrated according to an exemplary embodiment. Referring to FIG 13, the apparatus includes a display unit 131, a request sending unit 132 and an identifier acquisition instruction receiving unit 133. The display unit 131 is configured to execute displaying at least two battle team identifiers on a client where a second user identifier is located; the request sending unit 132 is configured to execute sending a request of an audio-use authority to a server; the identifier acquisition instruction receiving unit 133 is configured to execute determining the second user identifier as a participant identifier after receiving an identifier acquisition instruction fed back by the server according to the request of the audio-use authority.

As for the apparatus in the above embodiments, the specific modes of operation of each module are described in detail in the embodiments of the method, which will not be described in detail here.

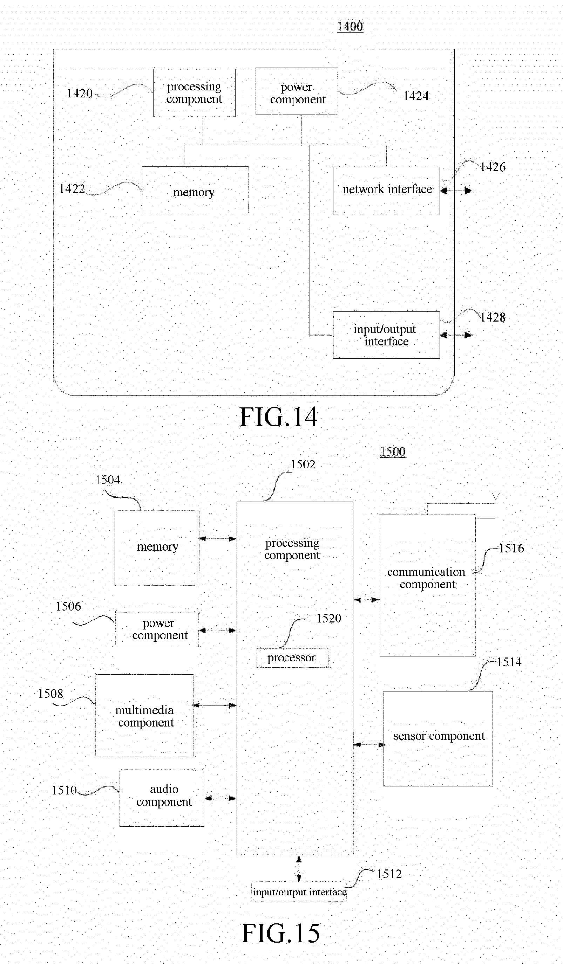

FIG. 14 is a block diagram of a device 1400 for a live battle illustrated according to an exemplary embodiment. For example, the device 1400 may be a server. Referring to FIG. 14, device 1400 includes a processing component 1420, which further includes one or a plurality of processors, and memory resource represented by memory 1422 for storing an instruction, such as applications, that may be executed by the processing component 1420. The application stored in the memory 1422 may include one or more than one modules, each module corresponds to a set of instructions. In addition, the processing component 1420 is configured to execute an instruction to execute the above live battle method. The device 1400 may further include a power component 1424 configured to execute power management of the device 1400, a wired or wireless network interface 1426 configured to connect the device 1400 to the network, and an input/output (I/O) interface 1428. The device 1400 may operate an operation system based on the memory 1422, such as Windows Server, Mac OS X, Unix, Linux, FreeBSD, or the like.

In an exemplary embodiment, there is also provided a storage medium including instructions, such as a memory 1422 including instructions executable by the processor of the device 1400 to perform the above described method. The storage medium may be a non-transitory computer-readable storage medium. For example, the non-transitory computer readable storage medium may be a ROM, a random-access memory (RAM), a CD-ROM, a magnetic tape, a floppy disc, and an optical data storage device.

FIG. 15 is a block diagram of a device 1500 for a live battle illustrated according to an exemplary embodiment. For example, the device 1500 may be a mobile phone, a computer, a digital broadcast terminal, a message transceiver, a gaming console, a tablet device, a medical device, a fitness device, a personal digital assistant, or the like. Referring to FIG. 15, device 1500 may include one or more of the following components: processing component 1502, memory 1504, power component 1506, multimedia component 1508, audio component 1510, input/output (I/O) interface 1512, sensor component 1514, and communication component 1516.

The processing component 1502 typically controls the overall operations of the electronic device 1500, such as the operations associated with display, telephone calls, data communications, camera operations, and recording operations. The processing component 1502 can include one or more processors 1520 to execute instructions to perform all or part of the steps in the above described methods. Moreover, the processing component 1502 can include one or more modules to facilitate the interaction between the processing component 1502 and other components. For example, the processing component 1502 can include a multimedia module to facilitate the interaction between the multimedia component 1508 and the processing component 1502.

The memory 1504 is configured to store various types of data to support the operation of the device 1500. Examples of such data include instructions for any application or method operated on device 1500, such as the contact data, the phone book data, messages, pictures, videos, and the like. The memory 1504 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 can include a power management system, one or more power sources, and other components associated with the generation, management, and distribution of power in the device 1500.

The multimedia component 1508 includes a screen providing an output interface between the device 1500 and the user. In some embodiments, the screen can include a liquid crystal display (LCD) and a touch panel (TP). In some embodiments, the screen can include an OLED (organic light emitting diode) display, or other types of displays. If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. When the device 1500 is in an operation mode, such as a photographing mode or a video mode, the front camera and/or the rear camera can receive external multimedia datum. Each of the front camera and the rear camera may be a fixed optical lens system or have focus and optical zoom capability.

The audio component 1510 is configured to output and/or input an audio signal. For example, the audio component 1510 includes a microphone (MIC) configured to receive an external audio signal when the electronic device 1500 is in an operation mode, such as a call mode, a recording mode, and a voice recognition mode. The received audio signal may be further stored in the memory 1504 or transmitted via the communication component 1516. In some embodiments, the audio component 1510 also includes a speaker for outputting the audio signal.

The I/O interface 1512 provides an interface between the processing component 1502 and peripheral interface modules, such as a keyboard, a click wheel, buttons, and the like. These buttons may include, but are not limited to, a home button, a volume button, a starting button, and a locking button.

The sensor component 1514 includes one or more sensors for providing status assessments of various aspects of the electronic device 1500. For example, the sensor component 1514 can detect an open/closed status of the electronic device 1500, relative positioning of components, for example the components are the display and the keypad of the electronic device 1500. The sensor component 1514 can also detect a change in position of one component of the electronic device 1500 or the electronic device 1500, the presence or absence of user contact with the electronic device 1500, an orientation, or an acceleration/deceleration of the electronic device 1500, and a change in temperature of the electronic device 1500. The sensor component 1514 can include a proximity sensor configured to detect the presence of nearby objects without any physical contact. The sensor component 1514 can also include a light sensor, such as a CMOS or CCD image sensor, configured to use in imaging applications. In some embodiments, the sensor component 1514 can also include an accelerometer sensor, a gyroscope sensor, a magnetic sensor, a pressure sensor, or a temperature sensor.

The communication component 1516 is configured to facilitate wired or wireless communication between the electronic device 1500 and other devices. The electronic device 1500 can access a wireless network based on a communication standard, such as Wi-Fi, 2G, 3G, 4G, or 5G, or a combination thereof. In an exemplary embodiment, the communication component 1516 receives broadcast signals or broadcast associated information from an external broadcast management system via a broadcast channel. In an exemplary embodiment, the communication component 1516 also includes a near field communication (NFC) module to facilitate short-range communications.

In an exemplary embodiment, the device 1500 may be implemented with one or more application specific integrated circuits (ASICs), digital signal processors (DSPs), digital signal processing devices (DSPDs), programmable logic devices (PLDs), field programmable Gate array (FPGA), controller, microcontroller, microprocessor or other electronic components to perform the above method.

In an exemplary embodiment, there is also provided a non-transitory computer-readable storage medium including instructions, such as a memory 1504 including instructions executable by the processor 1520 of the electronic device 1500 to perform the above described method. For example, the non-transitory computer readable storage medium may be a ROM, a random-access memory (RAM), a CD-ROM, a magnetic tape, a floppy disc, and an optical data storage device.

In an embodiment, a server is provided and includes a processor; a memory configured for storing an executable instruction for the processor; wherein the processor is configured to execute the instruction to implement the method for live broadcast interaction described in the above embodiments.

In an embodiment, an electronic device is provided and includes a processor; a memory configured for storing an executable instruction for the processor; wherein the processor is configured to execute the instruction to implement the method for live broadcast interaction described in the above embodiments.

In an embodiment, a non-transitory computer-readable storage medium is provided, wherein an instruction in the non-transitory computer-readable storage medium, when executed by a processor of an electronic device, enables the electronic device to execute the method for live broadcast interaction described in the above embodiments.

Other embodiments of the disclosure will readily occur to those skilled in the art upon consideration of the specification and practice of the disclosure disclosed herein. This disclosure is intended to cover any variations, uses, or adaptations of this disclosure that follow the general principles of this disclosure and include common general knowledge or conventional technical means in the technical field not disclosed by this disclosure. The specification and embodiments are to be regarded as exemplary only, with the true scope and spirit of the disclosure being indicated by the following claims.

It should be understood that the disclosure is not limited to the precise structure that has been described above and shown in the drawings, and various modifications and changes can be made without departing from its scope. The scope of the disclosure is limited only by the appended claims.

## Claims

1. A method for live broadcast interaction, comprising:
receiving a battle start request initiated by a client where a first user identifier is located;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

2. The method for live broadcast interaction according to claim 1, further comprising:
receiving a battle preparation request initiated by the client where the first user identifier is located, wherein the battle preparation request carries the first user identifier and the virtual space identifier where the first user identifier is located, the first user identifier has a first identity;
generating, according to the battle preparation request, at least two battle team identifiers corresponding to the virtual space identifier;
acquiring a participant identifier from member identifiers corresponding to the virtual space identifier, and associating the participant identifier with a corresponding battle team identifier, wherein the participant identifier has a second identity.

3. The method for live broadcast interaction according to claim 2, wherein said acquiring the participant identifier from the member identifiers corresponding to the virtual space identifier comprises:
acquiring, according to the virtual space identifier, a corresponding member identifier and a member state corresponding to each member identifier;
determining a member identifier whose member state is a first state as the participant identifier, wherein the first state is a state with an audio-use authority.

4. The method for live broadcast interaction according to claim 2 or 3, further comprising:
based on detecting that a member state of a member identifier is switched from a second state to a first state, determining the member identifier switched to the first state as the participant identifier, wherein the second state is a state without an audio-use authority.

5. The method for live broadcast interaction according to claim 1, wherein said acquiring the interaction information corresponding to each participant identifier in each battle team identifier, and converting the interaction information into the battle value of the corresponding battle team comprises:
acquiring the interaction information corresponding to each participant identifier in each battle team identifier, and converting the interaction information into a battle value of the participant identifier;
determining a sum of the battle values of all participant identifiers in the battle team identifier as the battle value of the battle team.

6. The method for live broadcast interaction according to claim 5, wherein when a battle team identifier corresponding to the participant identifier is changed from a first battle team identifier to a second battle team identifier, the battle value of the participant identifier before the change remains a battle value of the battle team corresponding to the first battle team identifier.

7. The method for live broadcast interaction according to claim 2, further comprising:
determining, according to the ranking position of each battle team identifier, a target battle team identifier for performing a preset task; wherein the preset task comprises a preset duration;
after reaching the preset duration, returning to the step of said acquiring the participant identifier from the member identifiers corresponding to the virtual space identifier.

8. A method for live broadcast interaction, comprising:
in response to a first triggering operation of a first identity corresponding to a first user identifier on a client where the first user identifier is located, generating a battle start request;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

9. The method for live broadcast interaction according to claim 8, wherein before in response to the first triggering operation of the first identity corresponding to the first user identifier on the client where the first user identifier is located, generating the battle start request, the method further comprises:
in response to a second trigger operation of the first identity corresponding to the first user identifier on the client where the first user identifier is located, generating a battle preparation request, wherein the battle preparation request carries the first user identifier and the virtual space identifier where the first user identifier is located;
generating, according to the battle preparation request, at least two battle team identifiers corresponding to the virtual space identifier;
acquiring a participant identifier from member identifiers corresponding to the virtual space identifier, and associating the participant identifier with a corresponding battle team identifier, wherein the participant identifier has a second identity.

10. The method for live broadcast interaction according to claim 9, wherein said acquiring the participant identifier from the member identifiers corresponding to the virtual space identifier comprises:
acquiring, according to the virtual space identifier, a corresponding member identifier and a member state corresponding to each member identifier;
determining a member identifier whose member state is a first state as the participant identifier, wherein the first state is a state with an audio-use authority.

11. The method for live broadcast interaction according to claim 9 or 10, further comprising:
when a member state of a member identifier switched from a second state to a first state is detected, determining the member identifier switched to the first state as the participant identifier, wherein the second state is a state without an audio-use authority.

12. The method for live broadcast interaction according to claim 8, wherein said acquiring the interaction information corresponding to each participant identifier in each battle team identifier, and converting the interaction information into the battle value of the corresponding battle team comprises:
acquiring the interaction information corresponding to each participant identifier in each battle team identifier, and converting the interaction information into a battle value of the participant identifier;
determining a sum of the battle values of all participant identifiers in the battle team identifier as the battle value of the battle team.

13. The method for live broadcast interaction according to claim 12, wherein when a battle team identifier corresponding to the participant identifier is changed from a first battle team identifier to a second battle team identifier, the battle value of the participant identifier before the change remains a battle value of the battle team corresponding to the first battle team identifier.

14. The method for live broadcast interaction according to claim 9, further comprising:
determining, according to the ranking position of each battle team identifier, a target battle team identifier for performing a preset task; wherein the preset task comprises a preset duration;
after reaching the preset duration, returning to the step of said acquiring the participant identifier from the member identifiers corresponding to the virtual space identifier.

15. A method for live broadcast interaction, comprising:
displaying at least two battle team identifiers on a client where a second user identifier is located;
sending a request of an audio-use authority to a server;
after receiving an identifier acquisition instruction fed back by the server according to the request of the audio-use authority, determining the second user identifier as a participant identifier.

16. The method for live broadcast interaction according to claim 15, wherein before sending the request of the audio-use authority to the server, the method further comprises:
generating, in response to a third triggering operation of a third identify corresponding to the second user identifier on a microphone-order identifier of the client where the second user identifier is located, or in response to an invitation request initiated by a client where the first user identifier is located to the client where the second user identifier is located, the request of the audio-use authority.

17. The method for live broadcast interaction according to claim 15, further comprising:
sending a behavior data of the participant identifier to the server and/or to the client where the first user identifier is located.

18. An apparatus for live broadcast interaction, comprising:
a battle value acquisition unit configured to execute acquiring interaction information corresponding to each participant identifier in each battle team identifier after receiving a battle start request initiated by a client where a first user identifier is located, and converting the interaction information into a battle value of a corresponding battle team; wherein the battle team identifier corresponds to a virtual space identifier where the first user identifier is located;
a ranking position determination unit configured to execute determining a ranking position of each battle team identifier according to a battle value of each battle team identifier.

19. The apparatus for live broadcast interaction according to claim 18, further comprising:
a battle preparation request receiving unit configured to execute receiving a battle preparation request initiated by the client where the first user identifier is located, wherein the battle preparation request carries the first user identifier and the virtual space identifier where the first user identifier is located; and the first user identifier has a first identity;
a battle team identifier generation unit configured to execute generating at least two battle team identities corresponding to the virtual space identifier according to the battle preparation request;
a participant identifier acquisition unit configured to execute acquiring a participant identifier from member identifiers corresponding to the virtual space identifier and associating the participant identifier with a corresponding battle team identifier; wherein the participant identifier has a second identity.

20. The apparatus for live broadcast interaction according to claim 19, the participant identifier acquisition unit is further configured to execute:
acquiring, according to the virtual space identifier, a corresponding member identifier and a member state corresponding to each member identifier;
determining a member identifier whose member state is a first state as the participant identifier, wherein the first state is a state with an audio-use authority.

21. The apparatus for live broadcast interaction according to claim 19 or 20, wherein the participant identifier acquisition unit is further configured to execute:
when a member state of a member identifier switched from a second state to a first state is detected, determining the member identifier switched to the first state as the participant identifier, wherein the second state is a state without an audio-use authority.

22. The apparatus for live broadcast interaction according to claim 18, the ranking position determination unit is further configured to execute:
acquiring the interaction information corresponding to each participant identifier in each battle team identifier, and converting the interaction information into a battle value of the participant identifier;
determining a sum of the battle values of all participant identifiers in the battle team identifier as the battle value of the battle team.

23. The apparatus for live broadcast interaction according to claim 22, wherein when a battle team identifier corresponding to the participant identifier is changed from a first battle team identifier to a second battle team identifier, the battle value of the participant identifier before the change remains a battle value of the battle team corresponding to the first battle team identifier.

24. The apparatus for live broadcast interaction according to claim 19, further comprising:
a determination unit configured to execute determining a target battle team identifier for performing a preset task according to the ranking position of each battle team identifier; wherein the preset task comprises a preset duration; after reaching the preset duration, returning to the step of said acquiring the participant identifier from the member identifiers corresponding to the virtual space identifier.

25. An apparatus for live broadcast interaction, comprising:
a battle start request generation unit configured to execute generating a battle start request in response to a first triggering operation of a first identity corresponding to a first user identifier on a client where the first user identifier is located;
a battle value acquisition unit configured to execute acquiring interaction information corresponding to each participant identifier in each battle team identifier, and converting the interaction information into a battle value of a corresponding battle team; wherein the battle team identifier corresponds to a virtual space identifier where the first user identifier is located
a ranking position determination unit configured to execute determining a ranking position of each battle team identifier according to a battle value of each battle team identifier.

26. The apparatus for live broadcast interaction according to claim 25, further comprising:
a battle preparation request generation unit configured to execute generating a battle preparation request in response to a second trigger operation of the first identity corresponding to the first user identifier on the client where the first user identifier is located, wherein the battle preparation request carries the first user identifier and the virtual space identifier where the first user identifier is located;
a battle team identifier generation unit configured to execute generating at least two battle team identifiers corresponding to the virtual space identifier according to the battle preparation request;
a participant identifier acquisition unit configured to execute acquiring a participant identifier from member identifiers corresponding to the virtual space identifier, and associating the participant identifier with a corresponding battle team identifier, wherein the participant identifier has a second identity.

27. The apparatus for live broadcast interaction according to claim 26, the participant identifier acquisition unit is further configured to execute:
acquiring, according to the virtual space identifier, a corresponding member identifier and a member state corresponding to each member identifier;
determining a member identifier whose member state is a first state as the participant identifier, wherein the first state is a state with an audio-use authority.

28. The apparatus for live broadcast interaction according to claim 26 or 27, wherein the participant identifier acquisition unit is further configured to execute:
when a member state of a member identifier switched from a second state to a first state is detected, determining the member identifier switched to the first state as the participant identifier, wherein the second state is a state without an audio-use authority.

29. The apparatus for live broadcast interaction according to claim 25, the ranking position determination unit is further configured to execute:
acquiring the interaction information corresponding to each participant identifier in each battle team identifier, and converting the interaction information into a battle value of the participant identifier;
determining a sum of the battle values of all participant identifiers in the battle team identifier as the battle value of the battle team.

30. The apparatus for live broadcast interaction according to claim 29, wherein when a battle team identifier corresponding to the participant identifier is changed from a first battle team identifier to a second battle team identifier, the battle value of the participant identifier before the change remains a battle value of the battle team corresponding to the first battle team identifier.

31. The apparatus for live broadcast interaction according to claim 26, further comprising:
a determination unit configured to execute determining a target battle team identifier for performing a preset task according to the ranking position of each battle team identifier; wherein the preset task comprises a preset duration; after reaching the preset duration, returning to the step of said acquiring the participant identifier from the member identifiers corresponding to the virtual space identifier.

32. An apparatus for live broadcast interaction, comprising:
a display unit configured to execute displaying at least two battle team identifiers on a client where a second user identifier is located;
a request sending unit configured to execute sending a request of an audio-use authority to a server;
an identifier acquisition instruction receiving unit configured to execute determining the second user identifier as a participant identifier after receiving an identifier acquisition instruction fed back by the server according to the request of the audio-use authority.

33. The apparatus for live broadcast interaction according to claim 32, further comprising:
a request generation unit configured to execute generating the request of the audio-use authority, in response to a third triggering operation of a third identify corresponding to the second user identifier on a microphone-order identifier of the client where the second user identifier is located, or in response to an invitation request initiated by a client where the first user identifier is located to the client where the second user identifier is located.

34. The apparatus for live broadcast interaction according to claim 32, further comprising:
a behavior data sending unit configured to execute sending a behavior data of the participant identifier to the server and/or a client where the first user identifier is located.

35. A server, comprising:
a processor;
a memory configured for storing an executable instruction for the processor;
wherein the processor is configured to execute the instruction to implement a method for live broadcast interaction, the method comprising:
receiving a battle start request initiated by a client where a first user identifier is located;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

36. An electronic device, comprising:
a processor;
a memory configured for storing an executable instruction for the processor;
wherein the processor is configured to execute the instruction to implement a method for live broadcast interaction, the method comprising:
in response to a first triggering operation of a first identity corresponding to a first user identifier on a client where the first user identifier is located, generating a battle start request;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

37. An electronic device, comprising:
a processor;
a memory configured for storing an executable instruction for the processor;
wherein the processor is configured to execute the instruction to implement a method for live broadcast interaction, the method comprising:
displaying at least two battle team identifiers on a client where a second user identifier is located;
sending a request of an audio-use authority to a server;
after receiving an identifier acquisition instruction fed back by the server according to the request of the audio-use authority, determining the second user identifier as a participant identifier.

38. A storage medium, wherein an instruction in the storage medium, when executed by a processor of a server, enables the server to execute a method for live broadcast interaction, wherein the method comprises:
receiving a battle start request initiated by a client where a first user identifier is located;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

39. A storage medium, wherein an instruction in the storage medium, when executed by a processor of an electronic device, enables the electronic device to execute a method for live broadcast interaction, wherein the method comprises:
in response to a first triggering operation of a first identity corresponding to a first user identifier on a client where the first user identifier is located, generating a battle start request;
acquiring interaction information corresponding to each participant identifier in each battle team identifier, and converting the interaction information into a battle value of a corresponding battle team; wherein the battle team identifier corresponds to a virtual space identifier where the first user identifier is located;
determining, according to a battle value of each battle team identifier, a ranking position of each battle team identifier.

40. A storage medium, wherein an instruction in the storage medium, when executed by a processor of an electronic device, enables the electronic device to execute a method for live broadcast interaction, wherein the method comprises:
displaying at least two battle team identifiers on a client where a second user identifier is located;
sending a request of an audio-use authority to a server;
after receiving an identifier acquisition instruction fed back by the server according to the request of the audio-use authority, determining the second user identifier as a participant identifier.
